# EUROPEAN PATENT APPLICATION

(11) **EP 4 571 996 A1**
(43) Date of publication of application: **18.06.2025**
(21) Application number: 23864405.8
(22) Date of filing: 21.06.2023
(51) Int. Cl.: H01M 50/553, H01M 50/564

(54) **POST TERMINAL, TOP COVER STRUCTURE, BATTERY, BATTERY MODULE AND BATTERY PACK**

(30) Priority: 09.05.2023 CN 202321090677 U
(71) Applicant: Eve Power Co., Ltd., Jingmen, Hubei 448000 (CN)
(72) Inventor: HE, Xiaowu, Jingmen, Hubei 448000 (CN); SHU, Kuanjin, Jingmen, Hubei 448000 (CN); ZHENG, Xu, Jingmen, Hubei 448000 (CN); WANG, Junmin, Jingmen, Hubei 448000 (CN); AN, Suli, Jingmen, Hubei 448000 (CN); HUANG, Jinhai, Jingmen, Hubei 448000 (CN); HE, Wei, Jingmen, Hubei 448000 (CN)
(74) Representative: Herrero & Asociados, S.L.
(86) International application number: PCT/CN2023/101622
(87) International publication number: WO 2024/055666

(57) **Abstract**

The present disclosure relates to the technology field of batteries, and discloses a pole, a top cover structure, a battery, a battery module and a battery pack. The pole includes a first metal pillar and a second metal pillar connected to each other. One end of the first metal pillar is provided with a cold heading forming groove, and the other end is provided with a protruding portion. The second metal pillar is provided with a recessed portion. The protruding portion is embedded in the recessed portion to form a cold heading joint surface. The recessed portion (421) is recessed in a direction away from the cold heading forming groove (411).

## Description

The present disclosure claims priority to Chinese Patent Application No. 202321090677.X, filed to the Chinese Patent Office on May 9, 2023, the disclosure of which is incorporated herein by reference in its entirety.

### TECHNICAL FIELD

The present disclosure relates to the technology field of batteries, for example, to a pole, a top cover structure, a battery, a battery module and a battery pack.

### BACKGROUND

The battery generally includes a cell, a housing and a top cover. The top cover is sealed on the housing to form a protective shell with the housing, and the cell is accommodated in the protective shell. In related technologies, the top cover is often pierced with positive and negative conductive poles, so as to lead the positive electrode and the negative electrode of the cell out of the protective shell respectively.

In the related technologies, the material of the positive pole is aluminum, the material of the negative pole is copper, and the processing technology is stamping. The material utilization rate of the stamping process is about 55%, and the cost is high. Moreover, copper has a high density and is heavy. In order to reduce the weight of the top cover, some negative poles use copper-aluminum composite poles to reduce the proportion of copper in the negative poles. Although this reduces the overall weight of the top cover, the forming process of the copper-aluminum composite poles is generally copper-aluminum friction welding or copper-aluminum composite plate stamping, which has low material utilization and complex processes, resulting in the cost of the top cover still being very high.

### SUMMARY

The present disclosure provides a pole, a top cover structure, a battery, a battery module and a battery pack, which have a simple connection structure and can reduce the production cost of the pole.

In the first aspect, an embodiment of the present disclosure provides a pole. The pole includes a first metal pillar and a second metal pillar connected to each other. A first end of the first metal pillar is provided with a cold heading forming groove, and a second end of the first metal pillar is provided with a protruding portion. The second metal pillar is provided with a recessed portion. The protruding portion is embedded in the recessed portion to form a cold heading joint surface. The recessed portion is recessed in a direction away from the cold heading forming groove.

In one embodiment, an outer periphery of the first metal pillar is provided with a sealing flange portion. One side of the sealing flange portion close to the cold heading forming groove is provided with a connecting step, and the cold heading forming groove is provided on an end face of the connecting step.

In one embodiment, along a direction from the cold heading forming groove to the protruding portion, the thickness of the sealing flange portion is 0.3-2.0 mm, and the thickness of the connecting step is 0.3-1.5 mm.

In one embodiment, a cross-sectional shape of the cold heading joint surface is boss-shaped, circular, elliptical, triangular or arc-shaped.

In one embodiment, one of the first metal pillar and the second metal pillar is a copper pillar, and the other is an aluminum pillar.

In a second aspect, an embodiment of the present disclosure provides a top cover structure, including any one of the poles described above.

The top cover structure includes the above-mentioned pole and further includes:
a cover assembly;
a pin piece provided with a plug-in portion;
where the pole penetrates the cover assembly, with one end being plugged into the plug-in portion, and the sealing flange portion being located between the pin piece and the cover assembly; where a cross-sectional area of the sealing flange portion is larger than a cross-sectional area of the plug-in portion, and the sealing flange portion is able to cover the plug-in portion.

In one embodiment, the pin piece is provided with a convex bump protruding toward the pole. The plug-in portion is provided on the convex bump, and the sealing flange portion is located between the convex bump and the cover assembly.

In one embodiment, the convex bump is provided with a first step groove located at a periphery of one end of the plug-in portion close to the pole. The sealing flange portion is embedded in the first step groove.

In one embodiment, the cover assembly is provided with a first groove. The convex bump is embedded in the first groove.

In one embodiment, the cover assembly is provided with a second step groove located in the first groove. The sealing flange portion is embedded in the second step groove.

In one embodiment, the cover assembly is provided with a second groove. The first groove is located in the second groove, and the pin piece is embedded in the second groove.

In one embodiment, an insulating sealing ring is further included. The cover assembly is provided with a through hole. The pole penetrates the through hole, the insulating sealing ring is sleeved on the pole, and the insulating sealing ring is arranged between the sealing flange portion and the cover assembly.

In a third aspect, an embodiment of the present disclosure provides a battery, including any one of the top cover structures described above, and further including a core package and a shell, where the core package is arranged in the shell, and the top cover structure is sealed on the shell.

In a fourth aspect, an embodiment of the present disclosure provides a battery module, including the above-mentioned battery.

In a fifth aspect, an embodiment of the present disclosure provides a battery pack, including the above-mentioned battery module.

### Beneficial effects:

The present disclosure provides a pole, a top cover structure, a battery, a battery module and a battery pack. The pole can be made of a composite plate of a first metal pillar and a second metal pillar through a cold heading process. The first side of the first metal pillar is repeatedly pressed by a cold heading mold. While the cold heading forming groove is formed by pressing, the protruding portion is formed on the second side of the first metal pillar. The protruding portion is then punched into the recessed portion on the second metal pillar, and the protruding portion is embedded in the recessed portion to form the cold heading joint surface to connect the first metal pillar and the second metal pillar, thereby obtaining the pole. The shape of the connection structure of the pole provided in the present disclosure is suitable for preparation by cold heading process, which has simple process and high material utilization rate, thereby reducing the manufacturing cost.

### BRIEF DESCRIPTION OF THE DRAWINGS

FIG. 1 is a schematic structural diagram of a pole provided in an embodiment of the present disclosure;
FIG. 2 is a first exploded schematic diagram of the pole shown in FIG. 1;
FIG. 3 is a second exploded schematic diagram of the pole shown in FIG. 1;
FIG. 4 is a cross-sectional view of the pole shown in FIG. 1;
FIG. 5 is a schematic structural diagram of a top cover structure provided in an embodiment of the present disclosure;
FIG. 6 is an exploded schematic diagram of the top cover structure shown in FIG. 5;
FIG. 7 is a partial schematic diagram of a top cover structure provided in an embodiment of the present disclosure;
FIG. 8 is an enlarged schematic diagram of position A shown in FIG. 7;
FIG. 9 is a schematic structural diagram of the pole shown in FIG. 6;
FIG. 10 is a schematic structural diagram of an adapter provided in an embodiment of the present disclosure;
FIG. 11 is a schematic structural diagram of an insulating plate provided in an embodiment of the present disclosure;
FIG. 12 is a schematic structural diagram of a battery provided in an embodiment of the present disclosure.

### Reference numerals in the drawings:

1, cover assembly; 11, top cover plate; 12, insulating plate; 13, first groove; 14, second step groove; 15, second groove; 16, through hole;
2, terminal; 21, third step groove;
3, adapter; 31, pin piece; 311, convex bump; 3111, first step groove; 3112, plug-in portion; 312, fuse slot; 32, tab connection portion; 321, tab groove; 33, machine clamping portion;
4, pole; 41, first metal pillar; 411, cold heading forming groove; 412, protruding portion; 413, connecting step; 414, sealing flange portion; 42, second metal pillar; 421, recessed portion; 422, riveted flange portion; 43, cold heading joint surface;
5, insulation sealing ring;
6, upper insulation sheet;
7, protective film;
10, core package;
20, shell.

### DETAILED DESCRIPTION

In the description of the present disclosure, unless otherwise clearly specified and limited, the terms "mounted", "connected with", and "fixed" should be interpreted broadly, and may be, for example, fixed connections, detachable connections, or integral connections; it may be mechanical or electrical connections; it may also be direct connections or indirect connections via intermediate structures; it may also be internal communications of two elements or interaction relationships between two elements.

In the present disclosure, unless otherwise clearly specified or limited, a first feature being "on" or "under" a second feature may include an embodiment in which the first feature is in direct contact with the second feature, or may also include an embodiment in which the first feature and the second feature are not in direct contact with each other, but are contacted via another feature formed therebetween. Furthermore, a first feature being "on", "above", or "on top of" a second feature may include an embodiment in which the first feature is right or obliquely above the second feature, or just means that the first feature is at a height higher than that of the second feature. A first feature being "below", "under", or "on bottom of" a second feature may include an embodiment in which the first feature is right or obliquely below the second feature, or just means that the first feature is at a height lower than that of the second feature.

In the description of this embodiment, orientations or positional relationships indicated by terms such as "up", "down", "right", "left", are based on the orientations or positional relationships shown in the accompanying drawings, and are merely for the convenience of description and simplification of operation, rather than indicating or implying that the indicated device or element must have a specific orientation, be constructed and operated in a specific orientation, and therefore should not be understood as a limitation on the present disclosure. Furthermore, the terms "first" and "second" are only used for distinction in description, and have no special meanings.

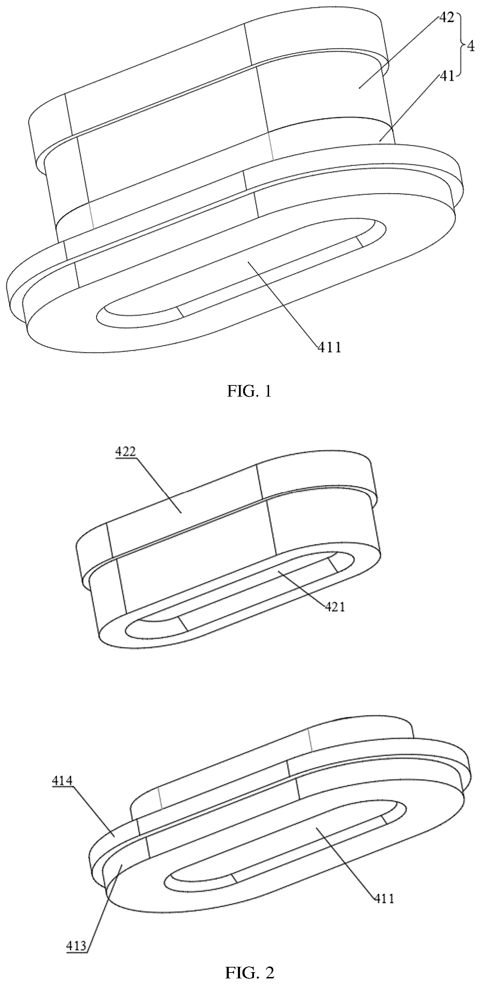

As shown in FIGs. 1 to 4, this embodiment provides a pole 4, which includes a first metal pillar 41 and a second metal pillar 42 connected to each other. A first end of the first metal pillar 41 is provided with a cold heading forming groove 411, a second end of the first metal pillar 41 is provided with a protruding portion 412. The second metal pillar 42 is provided with a recessed portion 421. The protruding portion 412 is embedded in the recessed portion 421 to form a cold heading joint surface 43. The recessed portion 421 is recessed in a direction away from the cold heading forming groove 411. In one embodiment, one of the first metal pillar 41 and the second metal pillar 42 is a copper pillar, and the other is an aluminum pillar. In this embodiment, the first metal pillar 41 is a copper pillar, and the second metal pillar 42 is an aluminum pillar. In the pole 4, a mass proportion of copper is 5%-50%.

The pole 4 in this embodiment can be made of a composite plate of the first metal pillar 41 and the second metal pillar 42 through a cold heading process. The first end of the first metal pillar 41 is repeatedly pressed using a cold heading mold. While the cold heading forming groove 411 is formed by pressing, the protruding portion 412 is formed on the second end of the first metal pillar 41. The protruding portion 412 is then punched into the recessed portion 421 on the second metal pillar 42, and the protruding portion 412 is embedded in the recessed portion 421 to form the cold heading joint surface 43 to connect the first metal pillar 41 and the second metal pillar 42, so as to manufacture the pole 4. The shape of the connection structure of the pole 4 is suitable for preparation by cold heading process, which has simple process and high material utilization rate, thereby reducing the manufacturing cost. The shape of the cold heading joint surface 43 is not limited. In one embodiment, the cross-sectional shape of the cold heading joint surface 43 is boss-shaped, circular, elliptical, triangular or arc-shaped.

Continuing to refer to FIGs. 1 to 4, in one embodiment, an outer periphery of the first metal pillar 41 is provided with a sealing flange portion 414. One side of the sealing flange portion 414 close to the cold heading forming groove 411 is provided with a connecting step 413, and the cold heading forming groove 411 is provided on an end surface of the connecting step 413. That is, the sealing flange portion 414 of the first metal pillar 41 forms the connecting step 413 on one side close to the cold heading forming groove 411. The sealing flange portion 414 is provided to facilitate the sealing between the pole 4 and a cover assembly 1, and the connecting step 413 is provided to facilitate the connection between the pole 4 and a pin piece 31. In this embodiment, the sealing flange portion 414 and the connecting step 413 are also formed by a cold heading process, so as to improve material utilization and reduce costs.

In one embodiment, along a direction from the cold heading forming groove 411 to the protruding portion 412, the thickness of the sealing flange portion 414 is 0.3-2.0 mm, and the thickness of the connecting step 413 is 0.3-1.5 mm, so as to reduce the material consumption of the pole 4 while ensuring the connection strength. When the thickness of the sealing flange portion 414 is less than 0.3 mm, the thickness of the sealing flange portion 414 is too thin and the structural strength is poor. When the thickness of the sealing flange portion 414 is greater than 2 mm, the volume is too large, resulting in a significant increase in material consumption. When the thickness of the connecting step 413 is less than 0.3 mm, the thickness of the connecting step 413 is too thin and the structural strength is poor. When the thickness of the connecting step 413 is greater than 2 mm, the volume is too large, resulting in a significant increase in material consumption. In one embodiment, the thickness of the sealing flange portion 414 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm or 2.0 mm; the thickness of the connecting step 413 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm or 1.5 mm. In one embodiment, the cross-sections of the sealing flange portion 414 and the connecting step 413 are circular, the diameter of the sealing flange portion 414 is 1.0-2.5 mm, and the diameter of the connecting step 413 is 0.5-1.5 mm. In another embodiment, the sealing flange portion 414 and the connecting step 413 are elliptical, a major axis length of the sealing flange portion 414 is 1.0-2.5 mm, and a major axis length of the connecting step 413 is 0.5-1.5 mm.

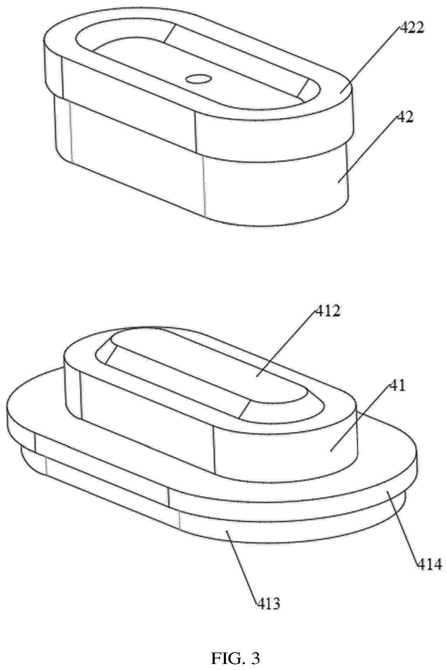

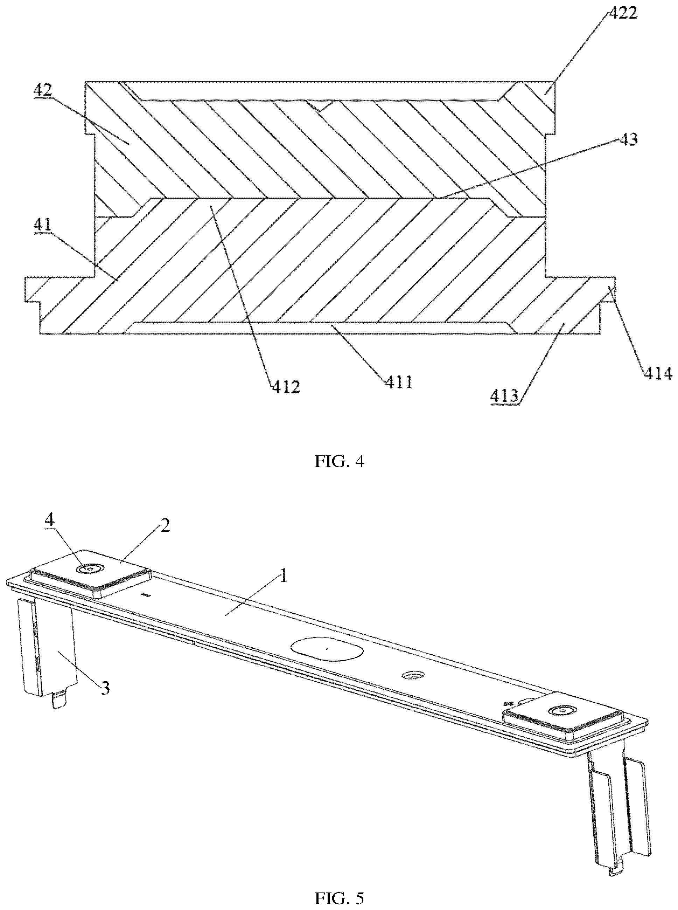

In one embodiment, as shown in FIGs. 3 and FIG. 4, the second metal pillar 42 is provided with a riveted flange portion 422. The riveted flange portion 422 is located at an end of the second metal pillar 42 away from the recessed portion 421. The riveted flange portion 422 is formed by a cold heading process, so as to improve material utilization.

As shown in FIG. 5, this embodiment provides a top cover structure, which includes a cover assembly 1, a terminal 2, an adapter 3 and the above-mentioned pole 4.

In one embodiment, as shown in FIGs. 5 to 11, the terminal 2 is arranged on a first side of the cover assembly 1. The adapter 3 includes a pin piece 31. The pin piece 31 is located on a second side of the cover assembly 1. The pin piece 31 is provided with a plug-in portion 3112. The pole 4 penetrates the cover assembly 1, a first end of the pole 4 is connected to the terminal 2, and a second end is plugged into the plug-in portion 3112. The sealing flange portion 414 is located between the pin piece 31 and the cover assembly 1. A cross-sectional area of the sealing flange portion 414 is larger than a cross-sectional area of the plug-in portion 3112, and the sealing flange portion 414 is able to cover the plug-in portion 3112. In this embodiment, the cross-sectional shape of the sealing flange portion 414 is not limited, and may be circular, elliptical, triangular, diamond-shaped, rectangular, irregular, etc.

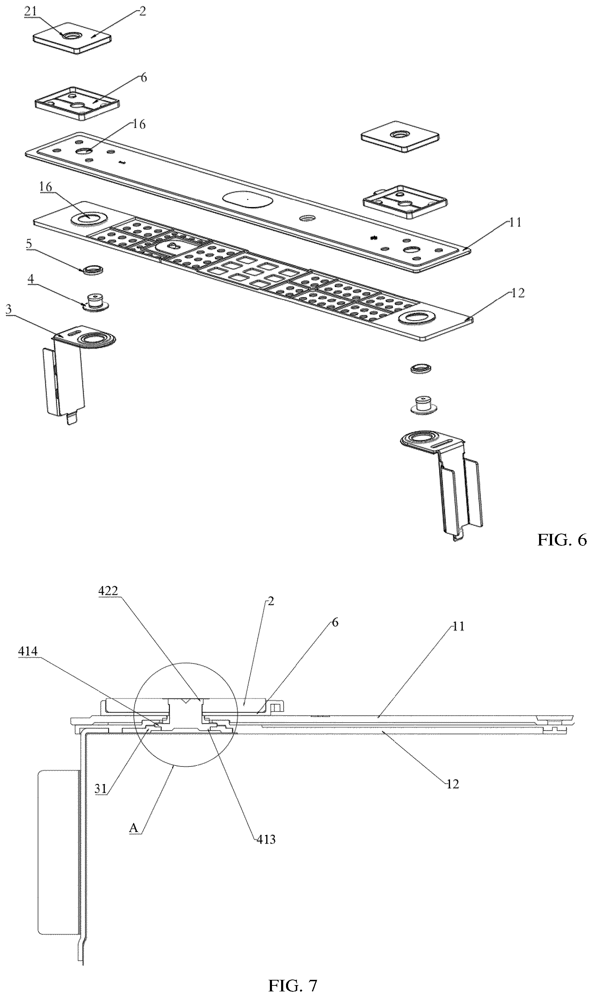

As shown in FIGs. 7 to 9, one end of the pole 4 located on one side of the sealing flange portion 414 and plugged into the plug-in portion 3112 is the connecting step 413. The plug-in portion 3112 in this embodiment is a through hole. During the welding process of the connecting step 413 on one side of the pin piece 31 away from the cover assembly 1, the cross-sectional area of the sealing flange portion 414 is larger than the cross-sectional area of the plug-in portion 3112, which can shield a gap between the connecting step 413 and a hole wall of the plug-in portion 3112, thereby preventing the heat generated by the welding from being conducted to the vicinity of the cover assembly 1 through the gap, thereby improving the insulation and sealing effects between the pole 4 and the cover assembly 1. The cross-sectional shape of the plug-in portion 3112 is not limited, and the cross-sectional shape of the plug-in portion 3112 is adapted to the cross-sectional shape of the connecting step 413. In the present embodiment, the plug-in portion 3112 is circular.

As shown in FIG. 6, in one embodiment, the cover assembly 1 includes a top cover plate 11 and an insulating plate 12 arranged in a stack. The terminal 2 is arranged on one side of the top cover plate 11 away from the insulating plate 12, the pin plate 31 is located on one side of the insulating plate 12 away from the top cover plate 11, and the sealing flange portion 414 is located between the pin plate 31 and the insulating plate 12. In this embodiment, the insulating plate 12 is a plastic plate, and is configured to isolate the pin piece 31 from the top cover piece 11, so as to prevent the pin piece 31 from being electrically connected to the top cover piece 11. The sealing flange portion 414 can be provided to protect the insulating plate 12, thereby preventing the insulating plate 12 from being deformed by heat when welding the connection step 413, thereby preventing the insulating effect from being reduced. In order to insulate the terminal 2 and the top cover sheet 11, the top cover structure further includes an upper insulating sheet 6, which is sandwiched between the top cover sheet 11 and the terminal 2 to prevent the top cover sheet 11 and the terminal 2 from being electrically connected.

As shown in FIG. 6, in one embodiment, the top cover structure further includes an insulating sealing ring 5. The cover assembly 1 is provided with a through hole 16. The pole 4 penetrates the through hole 16, the insulating sealing ring 5 is sleeved on the pole 4, and the insulating sealing ring 5 is arranged between the sealing flange portion 414 and the cover assembly 1. The insulating sealing ring 5 is at least partially arranged between the pole 4 and an inner wall of the through hole 16. The insulating sealing ring 5 not only serves to insulate the pole 4 from the cover assembly 1, but also serves to seal the through hole 16. The sealing flange portion 414 can be provided to protect the insulating sealing ring 5, thereby preventing the insulating sealing ring 5 from being deformed by heat when welding the connection step 413, thereby preventing the insulating and sealing effects from being reduced.

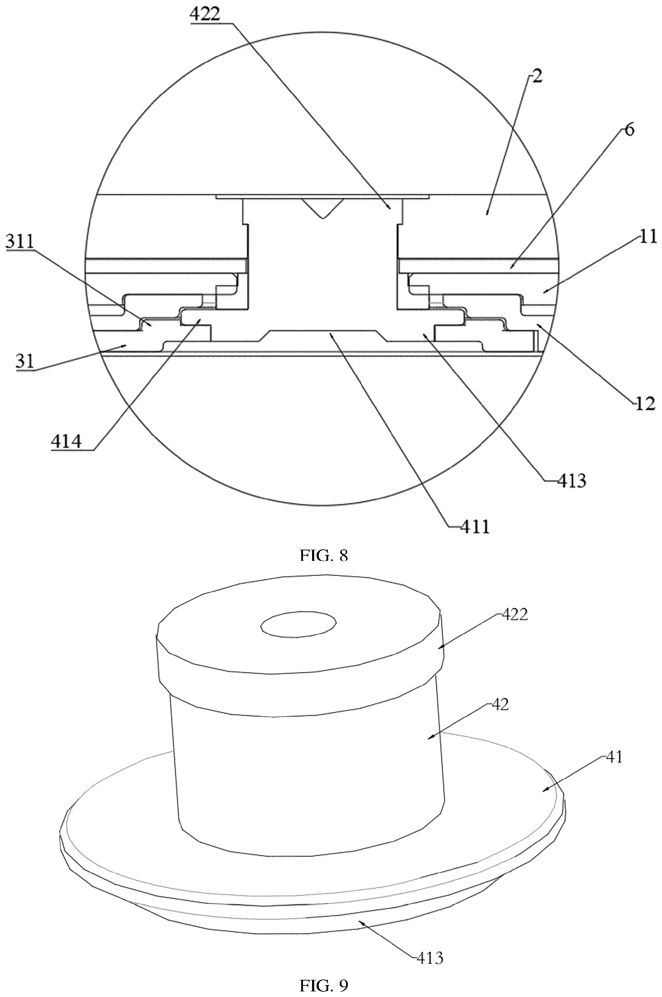

As shown in FIGs. 8 to 10, in one embodiment, the pin piece 31 is provided with a convex bump 311 protruding toward the pole 4. The plug-in portion 3112 is provided on the convex bump 311, and the sealing flange portion 414 is located between the convex bump 311 and the cover assembly 1. The convex bump 311 can make the pin piece 31 closer to the cover assembly 1, thereby reducing the size of the pole 4 in a direction from the pin piece 31 to the terminal 2, saving the material of the pole 4, and reducing the weight and cost.

In one embodiment, the cover assembly 1 is formed with a first groove 13, and the convex bump 311 is embedded in the first groove 13. The convex bump 311 is embedded in the first groove 13, so that the plug-in portion 3112 on the convex bump 311 is closer to the terminal 2, which can further reduce the size of the pole 4 in the direction from the pin piece 31 to the terminal 2, saving materials for the pole 4 and reducing weight and cost. In this embodiment, the first groove 13 is formed on the insulating plate 12.

Continuing to refer to FIGs. 8-10, in one embodiment, the convex bump 311 is provided with a first step groove 3111, the first step groove 3111 is located at a periphery of one end of the plug-in portion 3112 close to the cover assembly 1, and the sealing flange portion 414 is embedded in the first step groove 3111. The sealing flange portion 414 and the first step groove 3111 cooperate with each other, and the sealing performance between the sealing flange portion 414 and the convex bump 311 is better, and the blocking effect of the sealing flange portion 414 on the convex bump 311 is improved, thereby improving the sealing effect and insulation effect between the pole 4 and the cover assembly 1.

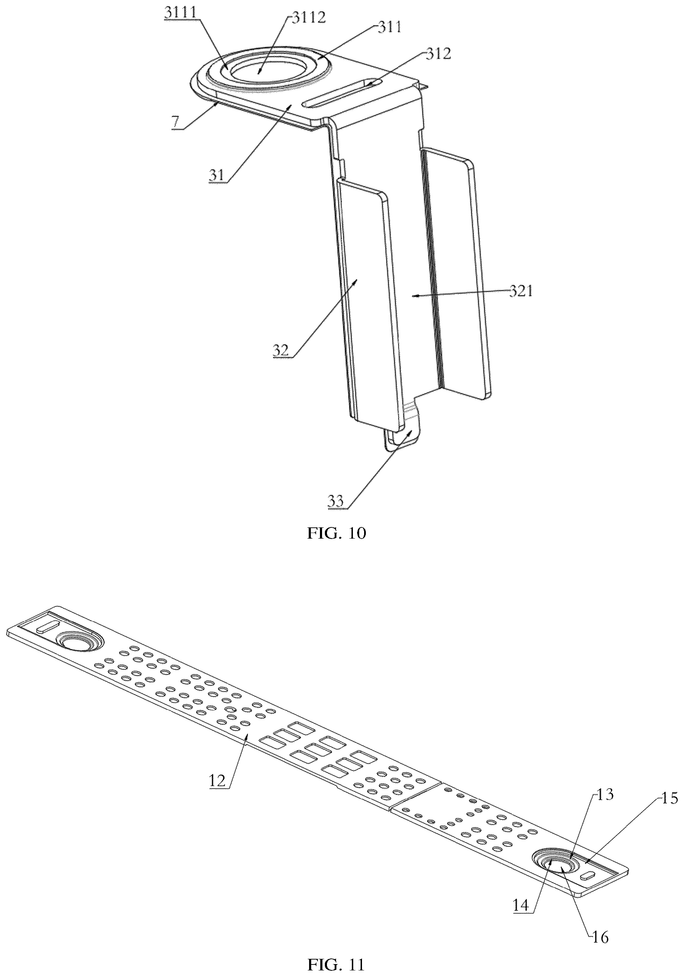

As shown in FIG. 11, in one embodiment, the cover assembly 1 is provided with a second step groove 14. The second step groove 14 is located in the first groove 13. A first end of the sealing flange portion 414 is embedded in the first step groove 3111, and a second end of the sealing flange portion 414 is embedded in the second step groove 14. In this embodiment, the second step groove 14 is formed on the insulating plate 12. The second step groove 14 not only increases the contact area between the sealing flange portion 414 and the cover assembly 1, and improves the sealing between the sealing flange portion 414 and the insulating plate 12, but also can further reduce the design size of the pole 4, save materials, reduce weight, and reduce costs.

As shown in FIG. 11, in one embodiment, the cover assembly 1 is provided with a second groove 15, the first groove 13 is located in the second groove 15, and the pin piece 31 is embedded in the second groove 15. In this embodiment, the second groove 15 is formed on the insulating plate 12. The pin piece 31 is entirely embedded in the second groove 15, which facilitates the relative positioning between the pin piece 31 and the insulating plate 12, at the same time, the design size of the pole 4 can be further reduced, the weight can be reduced, and the cost can be reduced.

As shown in FIG. 9, the pole 4 is riveted to the terminal 2 via the riveted flange portion 422. In one embodiment, as shown in FIG. 6, the terminal 2 is provided with a third step groove 21, and the riveted flange portion 422 is embedded in the third step groove 21. The cross-sectional area of the middle portion of the pole 4 is smaller than the cross-sectional area of the riveted flange portion 422. One side of the terminal 2 away from the pin piece 31 is riveted to the riveted flange portion 422 and the terminal 2.

In this embodiment, the pole 4 serving as the negative electrode on the cover assembly 1 is made of copper-aluminum composite plate by cold heading process, the sealing flange portion 414 and the riveted flange portion 422 are formed by cold heading process, and the material utilization rate of the copper-aluminum composite plate can reach 100%.

Along a direction from the pin piece 31 to the terminal 2, the thickness of the sealing flange portion 414 is 0.3-2.0 mm, and the thickness of the connecting step 413 is 0.3-1.5 mm. In this embodiment, the diameter of the sealing flange portion 414 is 1.0-2.5 mm, and the diameter of the connecting step 413 is 0.5-1.5 mm. By designing the dimensions of the sealing flange portion 414 and the connecting step 413, the conduction of heat to an inner layer of the top cover structure during the welding process can be reduced.

As shown in FIG. 10, in one embodiment, the adapter 3 further includes a tab connection portion 32 connected to the pin piece 31, and the tab connection portion 32 is connected to a tab of a core package. In one embodiment, the tab connection portion 32 is provided with a tab groove 321, and the tab groove 321 is configured to accommodate and limit the tab. In this embodiment, one end of the pin piece 31 close to the tab connection portion 32 is provided with a fuse slot 312. The fuse slot 312 can reduce the cross-sectional area of the pin piece 31. When the current on the pin piece 31 surges, the pin piece 31 at the fuse slot 312 will be fused to achieve protection.

In one embodiment, still referring to FIG. 10, the tab connecting portion 32 is further provided with a machine clamping portion 33 to facilitate an external jig to clamp the adapter 3 and implement production operations. In one embodiment, one side of the adapter 3 facing away from the cover assembly 1 is attached with a protective film 7. The protective film 7 can insulate and isolate the core package from the adapter 3, and can also prevent the adapter 3 from being scratched during the production process, thereby affecting the performance of the adapter 3.

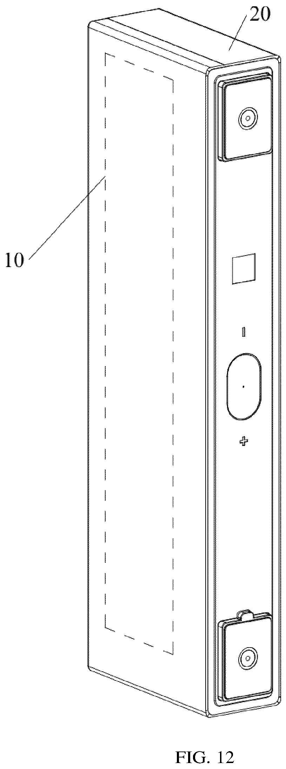

This embodiment further provides a battery, as shown in FIG. 12, the battery includes the above-mentioned top cover structure, a core package 10 and a shell 20. The core package 10 is provided in the shell 20, and the top cover structure is sealed on the shell 20. By using the above-mentioned top cover structure, the cost of the battery can be reduced and the safety of the battery can be improved.

This embodiment further provides a battery module, including the above-mentioned battery. By using the above-mentioned battery, the cost of the battery module can be reduced and the safety of the battery module can be improved.

This embodiment further provides a battery pack, including the above-mentioned battery module. By using the above-mentioned battery module, the cost of the battery pack can be reduced and the safety of the battery pack can be improved.

## Claims

1. A pole comprises a first metal pillar (41) and a second metal pillar (42) connected to each other; wherein a first end of the first metal pillar (41) is provided with a cold heading forming groove (411), and a second end of the first metal pillar (41) is provided with a protruding portion (412); the second metal pillar (42) is provided with a recessed portion (421); the protruding portion (412) is embedded in the recessed portion (421) to form a cold heading joint surface (43); the recessed portion (421) is recessed in a direction away from the cold heading forming groove (411).

2. The pole according to claim 1, wherein an outer periphery of the first metal pillar (41) is provided with a sealing flange portion (414); wherein one side of the sealing flange portion (414) close to the cold heading forming groove (411) is provided with a connecting step (413), and the cold heading forming groove (411) is provided on an end face of the connecting step (413).

3. The pole according to claim 2, wherein, along a direction from the cold heading forming groove (411) to the protruding portion (412), the thickness of the sealing flange portion (414) is 0.3-2.0 mm, and the thickness of the connecting step (413) is 0.3-1.5 mm.

4. The pole according to claim 1, wherein a cross-sectional shape of the cold heading joint surface (43) is boss-shaped, circular, elliptical, triangular or arc-shaped.

5. The pole according to claim 1, wherein one of the first metal pillar (41) and the second metal pillar (42) is a copper pillar, and the other is an aluminum pillar.

6. A top cover structure, comprising the pole (4) as claimed in any one of claims 1 to 5.

7. A top cover structure, comprising:
the pole (4) as claimed in any one of claims 2 to 3;
a cover assembly (1); and
a pin piece (31) provided with a plug-in portion (3112);
wherein the pole (4) penetrates the cover assembly (1), with the connecting step (413) being plugged into the plug-in portion (3112), and the sealing flange portion (414) being located between the pin piece (31) and the cover assembly (1); wherein a cross-sectional area of the sealing flange portion (414) is larger than a cross-sectional area of the plug-in portion (3112), and the sealing flange portion (414) is able to cover the plug-in portion (3112).

8. The top cover structure according to claim 7, wherein the pin piece (31) is provided with a convex bump (311) protruding toward the pole (4); the plug-in portion (3112) is provided on the convex bump (311), and the sealing flange portion (414) is located between the convex bump (311) and the cover assembly (1).

9. The top cover structure according to claim 8, wherein the convex bump (311) is provided with a first step groove (3111) located at a periphery of one end of the plug-in portion (3112) close to the pole (4); wherein the sealing flange portion (414) is embedded in the first step groove (3111).

10. The top cover structure according to claim 8, wherein the cover assembly (1) is provided with a first groove (13); wherein the convex bump (311) is embedded in the first groove (13).

11. The top cover structure according to claim 10, wherein the cover assembly (1) is provided with a second step groove (14) located in the first groove (13); wherein the sealing flange portion (414) is embedded in the second step groove (14).

12. The top cover structure according to claim 10, wherein the cover assembly (1) is provided with a second groove (15); wherein the first groove (13) is located in the second groove (15), and the pin piece (31) is embedded in the second groove.

13. The top cover structure according to claim 7, further comprising an insulating sealing ring (5); wherein the cover assembly (1) is provided with a through hole (16); the pole (4) penetrates the through hole (16), the insulating sealing ring (5) is sleeved on the pole (4), and the insulating sealing ring (5) is arranged between the sealing flange portion (414) and the cover assembly (1).

14. A battery, comprising the top cover structure as claimed in any one of claims 6 to 13, a core package (10) and a shell (20), wherein the core package (10) is provided in the shell (20), and the top cover structure is sealed on the shell (20).

15. A battery module comprising the battery as claimed in claim 14.

16. A battery pack comprising the battery module as claimed in claim 15.
